# EUROPEAN PATENT SPECIFICATION

(11) **EP 0 514 205 B1**
(45) Date of publication and mention of the grant of the patent: **31.01.1996**
(21) Application number: 92304430.9
(22) Date of filing: 15.05.1992
(51) Int. Cl.: C04B 35/18, C04B 33/04, C04B 38/00

(54) **Process of producing cordierite honeycomb structure**
Verfahren zur Herstellung einer Honigwabenstruktur aus Cordierit
Procédé pour la préparation d'une structure cordiérite, en nid d'abeilles

(30) Priority: 17.05.1991 JP 142577/91
(43) Date of publication of application: 19.11.1992
(73) Proprietor: NGK INSULATORS, LTD., Nagoya City Aichi Pref. (JP)
(72) Inventor: Ito, Toshikazu, Joei-Haitsu 301, Kasugai-shi, Aichi-ken (JP); Kumazawa, Kazuhiko, Nagoya-shi, Aichi-ken (JP); Hamanaka, Toshiyuku, Susuka-shi, Mie-ken (JP); Kasai, Yoshiyuki, Nagoya-shi, Aichi-ken (JP)
(74) Representative: Paget, Hugh Charles Edward

(56) References cited:
- EP-A- 0 278 749
- EP-A- 0 332 984
- EP-A- 0 354 721
- EP-A- 0 393 565
- FR-A- 2 188 492
- FR-A- 2 272 965
- GB-A- 1 456 456
- GB-A- 1 509 572

## Description

The present invention relates generally to a process of producing a honeycomb structure made of a cordierite composition, and more particularly to a technique suitable for improving and controlling physical properties of such a cordierite honeycomb structure.

There is known a process of producing a honeycomb structure of a cordierite composition, which includes the steps of: preparing a batch of a cordierite material consisting of a mixture having a desired cordierite composition whose major components are talc, kaoline, calcined kaoline and alumina; forming by extrusion a green body having a desired configuration by using the prepared cordierite material batch; and firing the formed green body into the intended honeycomb structure. Such a cordierite honeycomb structure is widely used for various purposes owing to its high heat resistance, and low coefficient of thermal expansion over a wide range of temperature. A typical application of the cordierite honeycomb structure is found in the field of purifying exhaust emissions containing hydrocarbon, carbon monoxide, and oxides of nitrogen, in particular, as a honeycomb support for a catalyst used for purifying exhaust emissions from motor vehicle engines.

The required physical or material properties of the cordierite honeycomb structure vary depending upon the specific application. The properties that are typically considered important include the porosity or water absorption percent of the honeycomb walls, the coefficient of thermal expansion and thermal shock resistance of the honeycomb structure, and the firing shrinkage rate. Among these properties, the porosity or water absorption percent is recognized as the most important property, when the honeycomb structure is used as a honeycomb catalyst substrate in an exhaust emission purifying device for motor vehicles. In this respect, it is noted that the porosity or water absorption percent of a honeycomb structure depends on the distribution of pores in the porous walls of the honeycomb structure, which has a considerable influence on the manner in which an exhaust emission purifying catalyst and a high surface area material are supported by the honeycomb structure. Accordingly, it is necessary to suitably control the porosity or water absorption percent of the porous walls of the honeycomb structure, for controlling the activity of the catalyst. To assure a sufficiently high degree of durability of the honeycomb structure when used as a honeycomb catalyst substrate in the vehicle exhaust emission purifying device which is subjected to rapid temperature changes, it is considered important to keep the coefficient of thermal expansion of the honeycomb structure at a sufficiently low level so as to improve the thermal shock resistance of the same.

For improving the physical properties of the cordierite honeycomb structure, various attempts have been made. For example, publication JP-A-53-82822 discloses a process of producing a cordierite honeycomb structure, in which the particle sizes of the magnesia source materials such as talc, magnesium carbonate and magnesium hydroxide are controlled so as to control the coefficient of thermal expansion of the honeycomb structure produced, and to control the size of the pores in the honeycomb structure. More specifically, the above-identified publication indicates that the pore size of the honeycomb structure increases with an increase in the particle sizes of the magnesia source materials. It is also known to control the particle sizes of the individual materials of the cordierite material batch so as to control the firing shrinkage rate of the cordierite honeycomb structure produced. Further, it is known that the coefficient of thermal expansion, firing shrinkage rate and other properties of the honeycomb structure may be controlled by suitably controlling the chemical composition of the cordierite material batch which gives the cordierite honeycomb structure.

GB-A-1509572 (equivalent to FR-A-2272965) discloses a cordierite honeycomb structure made from talc, kaolin, calcined kaolin and alumina. It is stated that the raw clay should be either laminated or delaminated. The calcined clay used was Glomax LL™. The document refers to GB-A-1456456, which details the composition of this calcined clay, and states that the calcined clay could not be delaminated during processing.

An extensive study by the present inventors on the physical properties of the cordierite honeycomb structure revealed that the porosity or water absorption percent of the honeycomb structure can be effectively increased without increasing the coefficient of thermal expansion thereof, by using a specific kind of calcined kaoline as at least a portion of the calcined kaoline as one major component of the cordierite material batch which gives the honeycomb structure. The study also indicates that the water absorption percent and other properties of the honeycomb structure can be suitably controlled by using two talc powders having different crystallite sizes, as the talc as one major component of the cordierite material batch, as well as using the specific calcined kaoline. Thus, the present inventors found it possible to produce, with high reproducibility, a cordierite honeycomb structure having desired physical properties such as porosity or water absorption percent.

It would be preferable to provide a process of producing, with high reproducibility, a cordierite honeycomb structure having desired physical properties such as porosity or water absorption percent and coefficient of thermal expansion, which process is capable of suitably controlling or adjusting the water absorption percent and other properties.

One aspect of the present invention provides a process of producing a cordierite honeycomb structure as set out in claim 1.

Another aspect of this invention provides a process of producing a cordierite honeycomb structure as set out in claim 2.

The calcined kaoline used in the invention preferably includes a calcine of a kaoline clay whose content of TiO₂ is not more than 2.5% by weight, as well as the calcine whose TiO₂ content is not more than 1.5% by weight.

According to the process of the present invention, the cordierite material batch is prepared by using major components consisting of talc, kaoline, calcined kaoline and alumina which cooperate to give a known chemical composition, namely, a composition consisting of 45-55% by weight of SiO₂, 32-40% by weight of Al₂O₃ and 12-15% by weight of MgO. It will be understood that the cordierite material batch may contain suitable additives other than the major components indicated above, for instance, aluminum hydroxide, silica and reclaimed cordierite material, depending upon the particular requirement.

The cordierite material batch prepared according to this invention is characterized in that at least a portion of the calcined kaoline as one major component of the batch is obtained by delaminating and calcining a kaoline clay, and has a content of TiO₂ of not more than 1.5% by weight. The cordierite honeycomb structure produced by using this cordierite material batch has improved physical properties, in particular, a significantly increased porosity or water absorption percent as well as a relatively low coefficient of thermal expansion.

The above-indicated calcine which gives at least a portion of the calcined kaoline is obtained by first delaminating a kaoline clay, i.e., separating the clay into considerably thin layers, and then calcining the delaminated kaoline by ordinary calcination method. The delamination of the kaoline clay is usually effected by crushing a mass of the appropriate kaoline clay in a wet mill such as "Attritor", by using glass beeds, quartz sand or the like as crushing media, with the least amount of a dispersing agent added. As a result of the delamination process, the kaoline clay having a laminar structure is separated into relatively flat particles each consisting of about three or four layers or fewer, preferably, one or two layer(s). The thus obtained flat kaoline particles are calcined for use in the cordierite material batch of the present invention. Since the amount of TiO₂ contained in the kaoline clay is effectively reduced during the delamination process, the thus processed calcined kaoline usually has a content of TiO₂ of 1.5% by weight or lower. The use of the calcined kaoline having such a low content of TiO₂ is effective to reduce the coefficient of thermal expansion of the cordierite honeycomb structure produced.

The calcined kaoline as a major component of the cordierite material batch may consist solely of the calcine of kaoline clay which has been subjected to delamination as described above. However, the calcined kaoline component may consist of the delaminated kaoline (TiO₂ content ≦ 1.5wt.%) as a first calcined kaoline powder, and non-delaminated kaoline as a second calcined kaoline powder whose content of TiO₂ is 2.5% or lower by weight. The second calcined kaoline powder is obtained by calcining a kaoline clay by ordinary calcination method. The use of the second powder having the TiO₂ content not exceeding 2.5% by weight is effective to avoid an increase in the coefficient of thermal expansion of the cordierite honeycomb structure produced, for example. The proportion or ratio of the first and second calcined powders of kaoline is suitably determined according to the desired properties of the cordierite honeycomb structure. Generally, the proportion is selected over a wide range between 1/99 and 99/1 by weight. Preferably the first calcined kaolin is at least 10% by weight of total calcined kaolin.

The cordierite material batch prepared according to the present invention is also characterized by the use of two talc powders having different crystallite sizes, as the talc component of the batch, as well as the use of the calcined powder of kaoline which has been subjected to delamination as described above, so that the physical properties of the cordierite honeycomb structure produced can be controlled as needed. A further study by the present inventors on the individual components of the cordierite material batch which gives the intended cordierite honeycomb structure revealed that the origin of the natural talc as one major component of the batch has a significant influence on the water absorption percent of the cordierite honeycomb structure produced, and the crystallite size of the natural talc considerably affects the water absorption percent or porosity and other physical properties of the cordierite honeycomb structure.

Described in more detail, the two talc powders having different crystallite sizes consist of a first talc powder having the crystallite size of 10µm or smaller, and a second talc powder having the crystallite size of 30µm or larger. These two talc powders are used in an appropriate proportion depending upon the required properties of the honeycomb structure. The two talc powders are available from various origins. For example, talc for the first talc powder whose crystallite size is 10µm or smaller is available from the state of Montana, U.S.A., and Australia, while talc available from the Liaoning Province, the People's Republic of China has a considerably large crystallite size and can be suitably used according to the present invention as the second talc powder whose crystallite size is 30µm or larger.

The first and second talc powders both have a CaO content not exceeding 0.4% by weight, since the CaO content exceeding 0.4% will cause the cordierite honeycomb structure produced to have an excessively high coefficient of thermal expansion and a low degree of thermal shock resistance, whereby the honeycomb structure cannot serve its function.

The proportion or ratio of these two talc powders which are different in the crystallite size is suitably determined according to the desired properties of the cordierite honeycomb structure. Generally, the proportion is selected over a wide range between 1/99 and 99/1 suitably 10/90 to 90/10 by weight.

As described above, the cordierite material batch is prepared according to the present invention by using the calcined kaoline powder which is obtained by delamination and calcination of a kaoline clay, as at least a portion of the calcined kaoline component of the batch, or by using the two talc powders having different crystallite sizes as the talc component of the batch in addition to the calcined powder of delaminated kaoline. By using the thus prepared cordierite material batch, a green body of the cordierite honeycomb structure is formed by extrusion, and the formed green body is fired into the cordierite honeycomb structure.

As well known in the art, the cordierite material batch may include a suitable plasticizing aid, so that the plasticized batch is easily formed by an extruding press, into a desired green honeycomb body. The green honeycomb body is dried, and is then fired according to a suitable temperature-time pattern. For instance, the dried green honeycomb body is first heated to 1100°C at a rate not exceeding 250°C/hour, then heated to a firing temperature of 1350-1440°C at a rate of 30°C/hour to 300°C/hour, and finally held at the firing temperature for a time ranging from 0.5 hour to 24 hours. Thus, the cordierite honeycomb structure having the suitably controlled properties is produced.

The above and optional objects, features and advantages of the present invention will be better understood by reading the following description of some examples of the invention, when considered in connection with the accompanying drawings, in which:
Fig. 1 is a photograph taken by a scanning electron microscope, of calcined kaoline A used in Examples 1 and 2;
Fig. 2 is a photograph taken by a scanning electron microscope, of calcined kaoline B used in Examples 1 and 2;
Fig. 3 is a graph indicating a relationship between the water absorption percent and porosity of a honeycomb structure prepared in Example 1 and a ratio of calcined kaoline B/calcined kaoline A used for the honeycomb structure;
Fig. 4 is a graph indicating a relationship between the water absorption percent and porosity of the honeycomb structure prepared in Example 1 and a ratio of calcined kaoline C/calcined kaoline A used for the honeycomb structure;
Fig. 5 is a graph indicating a relationship between the water absorption percent and porosity of the honeycomb structure prepared in Example 1 and a ratio of calcined kaoline D/calcined kaoline A used for the honeycomb structure;
Fig. 6 is a graph indicating a relationship between the coefficient of thermal expansion of the honeycomb structure of Example 1 and the calcined kaoline B/calcined kaoline A ratio;
Fig. 7 is a graph indicating a relationship between the coefficient of thermal expansion of the honeycomb structure of Example 1 and the calcined kaoline C/calcined kaoline A ratio;
Fig. 8 is a graph indicating a relationship between the coefficient of thermal expansion of the honeycomb structure of Example 1 and the calcined kaoline D/calcined kaoline A ratio; and
Fig. 9 is a graph indicating a relationship between the water absorption percent of a honeycomb structure prepared in Example 2 and a ratio of talc A/talc B used for the honeycomb structure, with the calcined kaoline B/calcined kaoline A ratio varied.

To further clarify the concept of this invention, there will be described some examples of the invention, for illustrative purpose only, to which the present invention is not limited.

Various specimens of the cordierite honeycomb structures were prepared in Examples 1 and 2 below, using respective mixtures of talc, kaoline I (raw or non-calcined kaoline), kaoline II (calcined kaoline) and alumina, whose contents (% by weight) are indicated in TABLE 1 below. Six different kaoline II (calcined kaoline) materials, which were used in combination for the various specimens, are specified in TABLE 2 below, in terms of the chemical composition, average particle size and specific surface area of the materials. The average particle size was measured by Sedigraph (available from Micromeritics, U.S.A.), while the specific surface area was obtained according to the BET equation (Brunauer-Emmett-Teller equation).

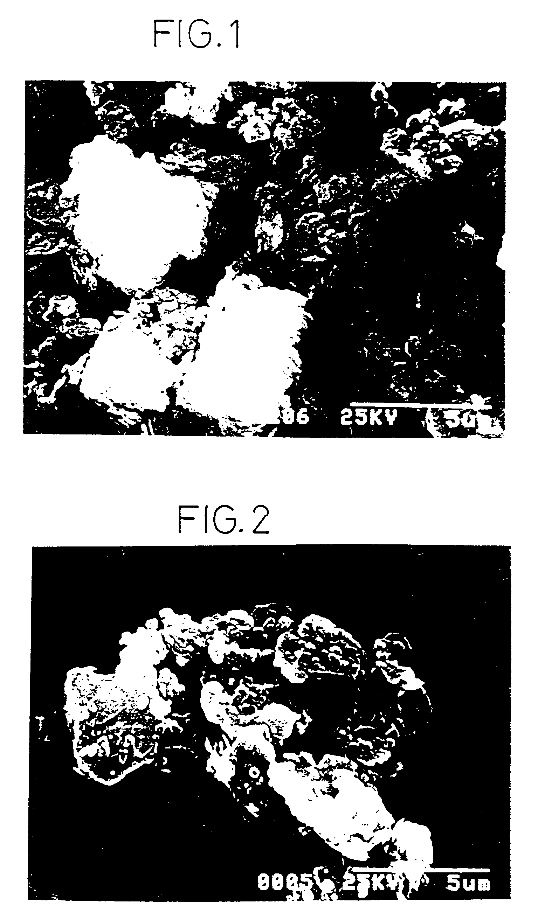

The kaoline II materials B and C were obtained by an ordinary delamination process, i.e., by crushing respective masses of kaoline clay in an attrition mill called "Attritor" for two hours, by using SiO₂ sand having a grain size of 150µm as crushing media, with a trace amount of hexametaphosphate soda as a dispersing additive. As a result, the kaoline clay having a laminar structure was separated into thin layers or relatively flat particles. Figs. 1 and 2 are photographs taken by a scanning electron microscope, of the kaoline II material A which was not delaminated, and the kaoline II material B which was delaminated, respectively.

**TABLE 1**

| Components | Talc | Kaoline I | Kaoline II | Alumina |
|---|---|---|---|---|
| Contents (wt.%) | 39.1 | 27.4 | 20.0 | 13.5 |

### EXAMPLE 1

Thirteen cordierite material batches Nos. 1-13 were prepared by using the calcined kaoline material A through F indicated in TABLE 2, in the proportions indicated in TABLE 3. The calcined kaoline obtained was mixed with the other materials of the cordierite composition, namely, talc, kaoline I and alumina, so as to give the chemical composition as indicated in TABLE 1. For each batch, 3 parts by weight of methylcellulose was added as an organic binder, per 100 parts by weight of the cordierite composition. The chemical compositions of the talc, kaoline I and alumina used are indicated in TABLE 4.

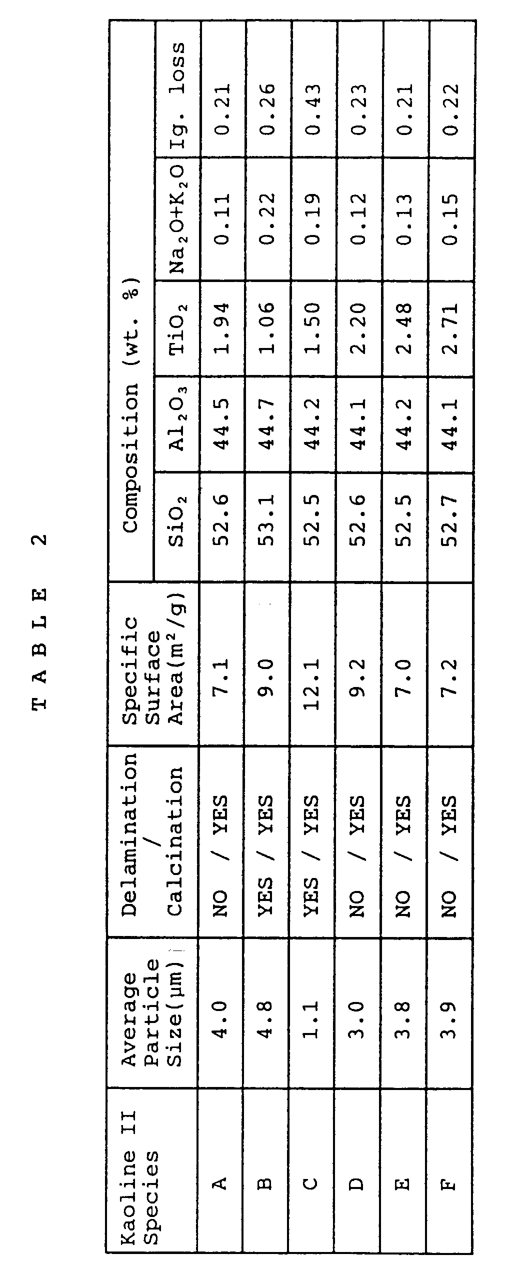

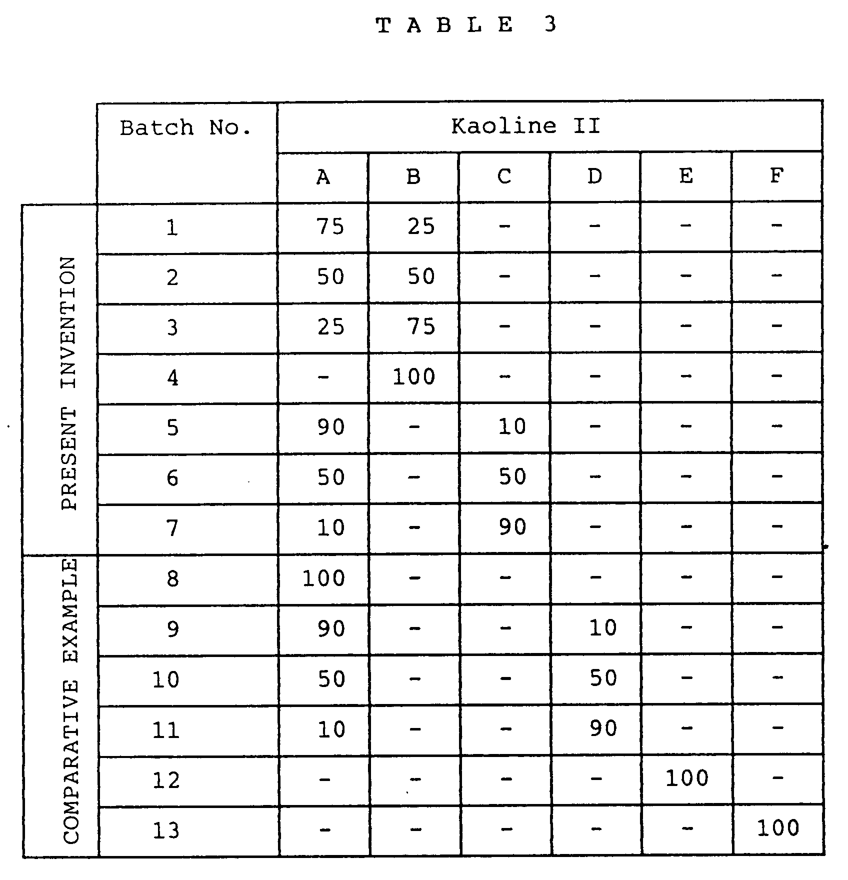

**TABLE 4**

| Chemical Composition (wt. %) | | | | | | |
|---|---|---|---|---|---|---|
| | SiO₂ | Al₂O₃ | MgO | CaO | TiO₂ | Ig-loss |
| Talc | 61.2 | 0.72 | 31.3 | 0.13 | 0.30 | 5.28 |
| Kaoline I | 46.1 | 38.5 | - | - | 1.38 | 13.7 |
| Alumina | - | 99.6 | - | - | - | - |

The thus prepared cordierite material batches Nos. 1-13 were used to form, by ordinary extrusion method, respective green honeycomb bodies each having a diameter of 118mm, a length of 102mm, a honeycomb wall thickness of 150µm, and about 62 cells per 1cm² of cross sectional area. The green honeycomb bodies were dried, and fired at 1400°C for three hours. Thus, the specimens of the cordierite honeycomb structure having different species or proportions of calcined kaoline were produced.

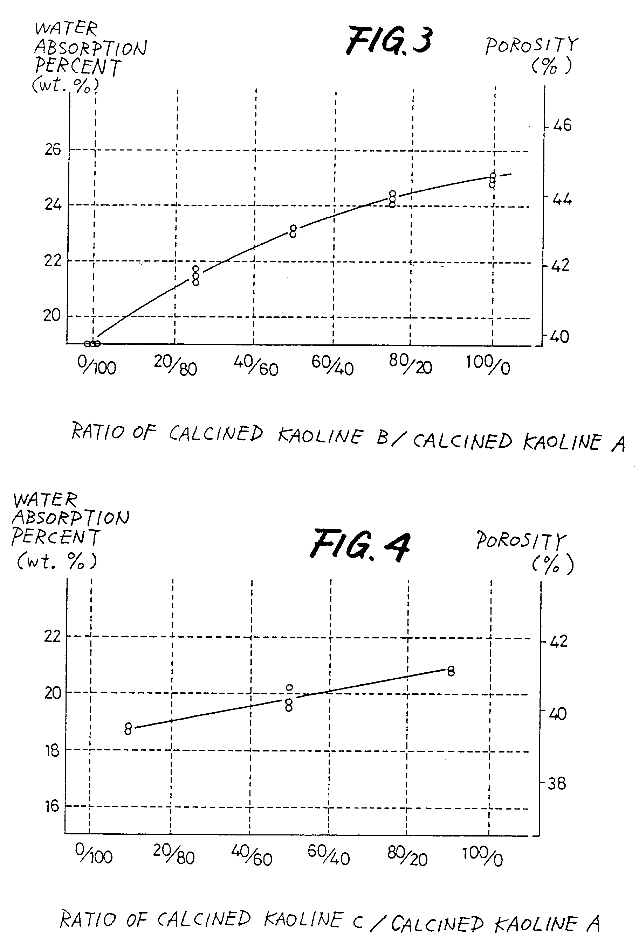

A simulation test for measuring the water absorption percent of the specimens as a catalyst substrate was conducted, with the specimens submerged in a water bath at 30°C for two minutes. The specimens taken out of the water bath were exposed to an air blow of 1.4kgf (0.137 MPa) per square centimeter (1 cm²), to blow off the excess water from the surfaces of the specimens. Then, the weights of the specimens which include the weight of the water absorbed by the honeycomb structure after the exposure to the air blow were measured. For each test specimen, a difference between the measured weight of the water-containing specimen and the weight of the dry specimen was calculated, to calculate the water absorption percent, which is equal to (calculated difference/dry weight) x 100. The result of the simulation test is indicated in TABLE 5 and in the graphs of Figs. 3, 4 and 5 in which the porosity of the specimens is also indicated in addition to the water absorption percent.

**TABLE 5**

| Batch No. | Water Absorption Percent(%) | Porosity (%) | CTE( x10⁻⁶/ 40-800°C) | Thermal Shock Resistance(°C) |
|---|---|---|---|---|
| 1 | 21.4 | 41.6 | 0.49 | 900 |
| 2 | 23.0 | 42.9 | 0.47 | 900 |
| 3 | 24.2 | 43.8 | 0.44 | 875 |
| 4 | 25.0 | 44.3 | 0.42 | 875 |
| 5 | 18.8 | 39.6 | 0.50 | 900 |
| 6 | 19.7 | 40.4 | 0.43 | 900 |
| 7 | 20.7 | 41.0 | 0.36 | 925 |
| 8 | 19.0 | 39.7 | 0.50 | 900 |
| 9 | 19.2 | 39.9 | 0.50 | 900 |
| 10 | 18.7 | 39.4 | 0.53 | 900 |
| 11 | 17.0 | 38.0 | 0.57 | 875 |
| 12 | 18.9 | 39.7 | 0.60 | 825 |
| 13 | 18.8 | 39.6 | 0.80 | 800 |

The specimens were also subjected to measurements of the coefficient of thermal expansion (CTE) in the direction of extrusion of the honeycomb body, over a temperature range of 40-800°C. The measured CTE values are indicated in TABLE 5 and Figs. 6, 7 and 8.

The specimens were further tested for thermal shock resistance. In the test, each specimen was held in an electric furnace for 20 minutes at a test temperature higher than 700°C. The test temperature was elevated in increments of 25°C after each test cycle wherein the specimen held at each test temperature was removed from the furnace for exposure to the room temperature, and the removed specimen was checked for cracking. The test temperature at which the cracking occurred is indicated in TABLE 5 as the thermal shock resistance. The cracking was confirmed by a so-called "ringing method", i.e., by a change in the nature of the sound generated when the specimen removed from the furnace was tapped.

Referring to the graphs of Figs. 3-5, the water absorption percent (porosity) of the honeycomb structure varies with a change in the weight ratio of two different species (B/A, C/A and D/A) of the calcined kaoline which were used in combination as kaoline II. It will be understood from these graphs that the honeycomb structure prepared by using the combination of the calcined kaoline material B (delaminated) and material A (non-delaminated) having almost the same average particle size exhibits the greatest rate of change of the water absorption percent in relation to the weight ratio of these materials B/A, as shown in Fig. 3.

The above phenomenon appears to occur due to the relatively large specific surface area of the calcined kaoline material B whose surfaces were roughened during the delamination process. Even if the average particle sizes of the materials A and B are almost the same, the calcined powder B of delaminated kaoline with uneven surfaces is more likely to form pores during the firing of the green honeycomb body, as compared with the calcined powder A of kaoline which was not delaminated. Thus, the use of the calcined powder B contributes to increasing the water absorption percent of the honeycomb structure produced due to the relatively large specific surface area thereof. It follows that the water absorption percent of the honeycomb structure increases with an increase in the weight ratio of the calcined powder B of delaminated kaoline to the calcined powder A of undelaminated kaoline, as shown in the graph of Fig. 3.

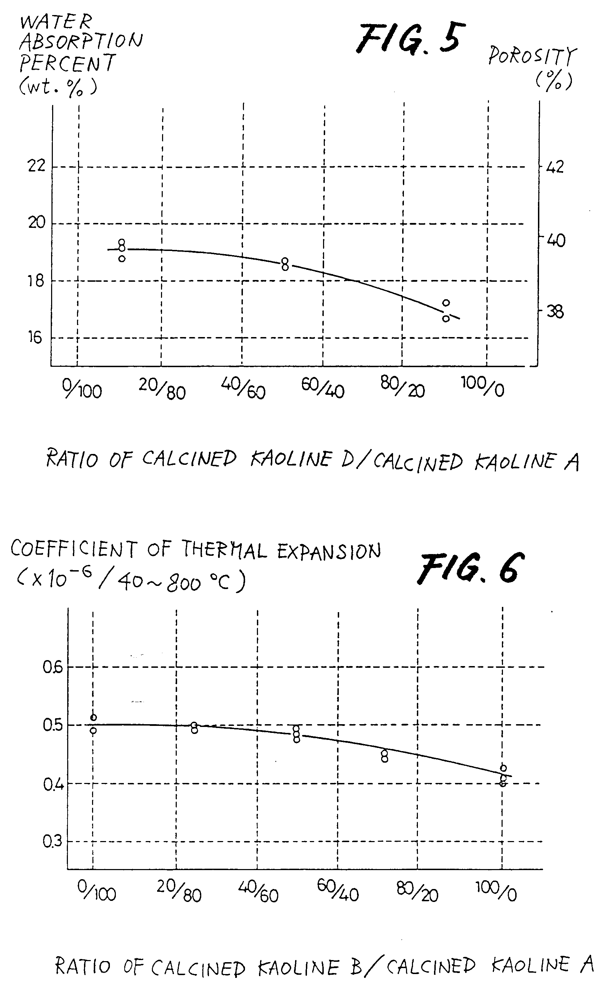

The graph of Fig. 4 indicates the variation of the water absorption percent of the honeycomb structure produced by using the combination of the calcined kaoline material A described above, and the calcined kaoline material C which was subjected to delamination and consists of minute particles. Generally, the honeycomb structure formed by firing materials consisting of minute particles tends to have a considerably high density, resulting in reduction in the water absorption percent thereof. However, the use of the calcined kaoline material C subjected to delamination does not lead to reduction in the water absorption percent or porosity of the honeycomb structure produced, but results in a slight increase in the water absorption percent.

The graph of Fig. 5 indicates the variation of the water absorption percent of the honeycomb structure produced by using the combination of the calcined kaoline material A described above, and the calcined kaoline material D which was not subjected to delamination and has a larger average particle size than that of the calcined kaoline material C. It will be recognized from the graph of Fig. 5 that the water absorption percent of the honeycomb structure decreases with an increase in the weight ratio of the calcined kaoline material D to the material A, even through the material D consists of the relatively coarse particles.

It is generally considered that kaoline having a large average particle size includes an accordingly large number of stacked or multilayered particles, which tend to affect the C-axis orientation of the cordierite honeycomb structure, which is an important factor to achieve a sufficiently lowered coefficient of thermal expansion of the honeycomb structure. Further, the stacked kaoline particles are likely to include impurities between the layers of each particle, which are also considered to have an adverse influence on the thermal expansion coefficient of the honeycomb structure produced. The calcined kaoline material B indicated in TABLE 2, which was subjected to delamination, includes few stacked particles and consists principally of flat particles, permitting easy C-axis orientation of the honeycomb structure produced irrespective of the relatively large particle size of the material B. Accordingly, the coefficient of thermal expansion of the honeycomb structure decreases with the increase in the weight ratio of the calcined kaoline material B to the material A, as shown in the graph of Fig. 6. Further, the calcined kaoline material B includes a relatively small amount of impurities, in particular, TiO₂. Therefore, the TiO₂ content in the kaoline II decreases with the increase in the weight ratio of the material B to the material A, resulting in a further lowered coefficient of thermal expansion of the honeycomb structure.

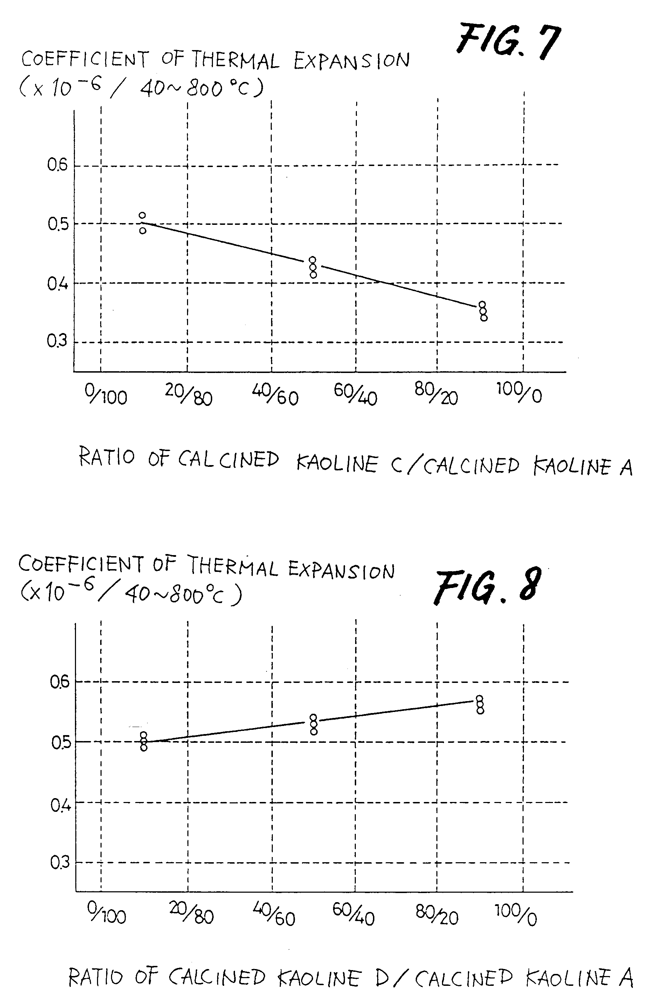

It will be understood from the graph of Fig. 7 that the calcined kaoline material C, which was subjected to delamination, has a similar effect to the material B of lowering the coefficient of thermal expansion of the honeycomb structure. Further, the calcined kaoline material C having a considerably small average particle size serves to promote the reaction of the materials for forming the cordierite honeycomb structure, and is effective to further lower the coefficient of thermal expansion of the honeycomb structure.

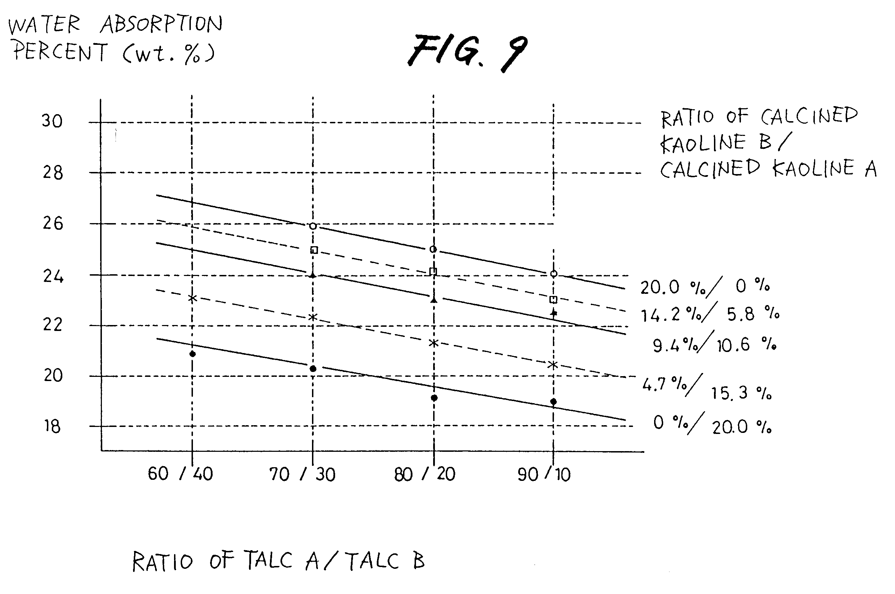

It will be understood from the graph of Fig. 8 that the coefficient of thermal expansion of the cordierite honeycomb structure increases with the weight ratio of the calcined kaoline material D to the material A even though the material D has a smaller particle size than the calcined kaoline material B which was subjected to delamination.

It will be understood that the kaoline obtained by delaminating and calcining a kaoline mineral is effective, when used as one component of a cordierite material batch, to increase the water absorption percent (porosity) of the cordierite honeycomb structure produced without unfavorably increasing its coefficient of thermal expansion.

### EXAMPLE 2

Some cordierite material batches were prepared in the same manner as in Example 1 by using the calcined kaoline materials A and B in Example 1 as the kaoline II (calcined kaoline) component of the batch, and powdered talc materials A and B (indicated in TABLE 6) having different crystallite sizes as the talc component of the batch. By using these cordierite material batches were prepared some specimens of cordierite honeycomb structures. Each cordierite material batch consists essentially of 39.1% by weight of talc in total, 27.4% by weight of kaoline I, 20.0% by weight of kaoline II in total and 13.5% by weight of alumina. The cordierite material batches were prepared so that the respective weight ratios of the talc material A to the talc material B were 60/40, 70/30, 80/20 and 90/10, and so that the total kaoline II content (20.0% by weight) consists of 20.0%, 4.7%, 9.4%, 14.2% and 0% by weight of the calcined kaoline material A, and 0%, 15.3%, 10.6%, 5.8% and 20.0% by weight of the calcined kaoline material B, respectively.

**TABLE 6**

| | Origin | Average Particle Size(µm) | Crystallite Size (µm) of Ores | Composition (wt. %) | | | |
|---|---|---|---|---|---|---|---|
| | | | | SiO₂ | Al₂O₃ | MgO | CaO |
| A | Montana, U.S.A. | 14 | 8 | 61.29 | 0.72 | 31.25 | 0.13 |
| B | Liaoning, China | 12 | 40 | 62.85 | 0.49 | 31.87 | 0.23 |

Since the size of the crystallite of the ore for the talc material B was extremely large, the thickness of a thin flake perpendicular to a cleavage surface of the ore was measured by optical microscopic photography, and the measured thickness value is indicated in TABLE 6 as the crystallite size of the talc material B. It is therefore noted that the actual crystallite size of the talc material B is larger than that in TABLE 6.

The thus produced specimens of honeycomb structures having different weight ratios of the two talc materials A and B and different weight ratios of the two calcined kaoline materials A and B were tested for the water absorption percent as in Example 1. The results of the test are indicated in the graph of Fig. 9. It will be understood from the graph of Fig. 9 that the water absorption percent of the honeycomb structure decreases with an increase in the weight ratio of the talc material A having the relatively small crystallite size to the talc material B having the relatively large crystallite size. Since the average particle sizes of the talc materials A and B are almost the same, the average particle size of the total talc content does not considerably vary with a change in the proportion or ratio of the talc materials A and B. Therefore, it is considered that the water absorption percent of the honeycomb structure varies with the average crystallite size of the total talc content. It is also noted that the water absorption percent of the honeycomb structure varies with a change in the weight ratio of the calcined kaoline B (delaminated) to the calcined kaoline A (undelaminated) where the weight ratio of the two talc materials A and B is constant.

It will be understood from the foregoing description that the cordierite honeycomb structure is produced by using a cordierite material batch which includes calcined kaoline as one major component, at least a portion of which consists of a calcined powder of kaoline which has been delaminated or separated into thin layers, and that the thus produced cordierite honeycomb structure has significantly improved physical properties such as the water absorption percent (porosity) and thermal shock resistance.

It will be also understood that the cordierite material batch is prepared by using two talc materials which have a relatively large difference in the crystallite size as a talc component of the batch, as well as the calcined kaoline as described above, and that the water absorption percent, thermal shock resistance and other properties of the cordierite honeycomb structure can be effectively controlled and favorably improved, by changing the ratio or proportion of the two talc materials. The process according to the present invention permits production of a cordierite honeycomb structure having desired physical properties, with high reproducibility or consistency in terms of the properties, assuring high stability in the quality of the honeycomb structure produced.

## Claims

1. A process of producing a cordierite honeycomb structure, comprising the steps of: preparing a cordierite material batch whose major components consist of talc, kaoline, calcined kaoline and alumina which collectively provide a chemical composition consisting of 45-55% by weight of SiO₂, 32-40% by weight of Al₂O₃ and 12-15% by weight of MgO; forming a green body of said cordierite honeycomb structure, by extrusion using said cordierite material batch; and firing said green body into said cordierite honeycomb structure, said process being characterized in that:
at least a portion of said calcined kaoline is obtained by delaminating and calcining a kaoline clay prior to mixing it with the other components to form said batch such that said delaminated and calcined kaoline clay has a content of TiO₂ of not more than 1.5% by weight.

2. A process of producing a cordierite honeycomb structure, comprising the steps of: preparing a cordierite material batch whose major components consist of talc, kaoline, calcined kaoline and alumina which collectively provide a chemical composition consisting of 45-55% by weight of SiO₂, 32-40% by weight of Al₂O₃ and 12-15% by weight of MgO; forming a green body of said cordierite honeycomb structure, by extrusion using said cordierite material batch; and firing said green body into said cordierite honeycomb structure, said process being characterized in that:
at least a portion of said calcined kaoline is obtained by delaminating and calcining a kaoline clay prior to mixing it with the other components to form said batch, such that said delaminated and calcined kaoline clay has a content of TiO₂ of not more than 1.5% by weight, said talc consisting of a mixture of a first talc powder having a content of CaO of not more than 0.4% by weight and a crystallite size of not larger than 10µm, and a second talc powder having a content of CaO of not more than 0.4% by weight and a crystallite size of not smaller than 30µm.

3. A process according to claim 1 or 2, wherein said calcined kaoline as one major component of said cordierite material batch further includes a calcine of a kaoline clay having a content of TiO₂ of not more than 2.5% by weight.

4. A process according to any one of claims 1-3, wherein said step of firing said green body comprises heating said green body to 1100°C at a rate not exceeding 250°C/hour, then heating said green body to a firing temperature of 1350-1440°C at a rate of 30°C/hour to 300°C/hour, and finally holding said green body at the firing temperature for a time of 0.5 hour to 24 hours.

## Patentansprüche

1. Verfahren zur Herstellung einer Cordierit-Wabenstruktur, folgende Schritte umfassend: Herstellung einer Cordieritmaterial-Charge, deren Hauptkomponenten aus Talk, Kaolin, kalziniertem Kaolin und Tonerde bestehen, die zusammen eine chemische Zusammensetzung ergeben, die aus 45-55 Gew.-% SiO₂, 32-40 Gew.-% Al₂O₃ und 12-15 Gew.-% MgO besteht; Ausbilden eines Grünkörpers der Cordierit-Wabenstruktur durch Strangpressen unter Verwendung der Cordieritmaterial-Charge; und Brennen des Grünkörpers zur Cordierit-Wabenstruktur, wobei das Verfahren dadurch gekennzeichnet ist, daß
zumindest ein Teil des kalzinierten Kaolins durch Delaminieren und Kalzinieren eines Kaolintons vor seinem Vermischen mit den anderen Komponenten erhalten wird, um die Charge zu bilden, sodaß der delaminierte und kalzinierte Kaolinton einen TiO₂-Gehalt von nicht mehr als 1,5 Gew.-% aufweist.

2. Verfahren zur Herstellung einer Cordierit-Wabenstruktur, folgende Schritte umfassend: Herstellung einer Cordieritmaterial-Charge, deren Hauptkomponenten aus Talk, Kaolin, kalziniertem Kaolin und Tonerde bestehen, die zusammen eine chemische Zusammensetzung ergeben, die aus 45-55 Gew.-% SiO₂, 32-40 Gew.-% Al₂O₃ und 12-15 Gew.-% MgO besteht; Ausbilden eines Grünkörpers der Cordierit-Wabenstruktur durch Strangpressen unter Verwendung der Cordieritmaterial-Charge; und Brennen des Grünkörpers zur Cordierit-Wabenstruktur, wobei das Verfahren dadurch gekennzeichnet ist, daß
zumindest ein Teil des kalzinierten Kaolins durch Delaminieren und Kalzinieren eines Kaolintons vor seinem Vermischen mit den anderen Komponenten erhalten wird, um die Charge zu bilden, sodaß der delaminierte und kalzinierte Kaolinton einen TiO₂-Gehalt von nicht mehr als 1,5 Gew.-% aufweist, wobei der Talk aus einem Gemisch aus einem ersten Talkpulver mit einem CaO-Gehalt von nicht mehr als 0,4 Gew.-% und einer Kristallitgröße von nicht über 10 µm und einem zweiten Talkpulver mit einem CaO-Gehalt von nicht mehr als 0,4 Gew.-% und einer Kristallitgröße von nicht unter 30 µm besteht.

3. Verfahren nach Anspruch 1 oder 2, worin das kalzinierte Kaolin als eine Hauptkomponente der Cordieritmaterial-Charge weiters ein kalziniertes Produkt eines Kaolintons mit einem TiO₂-Gehalt von nicht über 2,5 Gew.-% umfaßt.

4. Verfahren nach einem der Ansprüche 1 bis 3, worin der Schritt des Brennens des Grünkörpers das Erhitzen des Grünkörpers auf 1.100°C mit einer Rate von nicht über 250°C/Stunde, das anschließende Erhitzen des Grünkörpers auf eine Brenntemperatur von 1.350-1.440°C mit einer Rate von 30°C/Stunde bis 300°C/Stunde und schließlich das Halten des Grünkörpers auf der Brenntemperatur für einen Zeitraum von 0,5 Stunden bis 24 Stunden umfaßt.

## Revendications

1. Procédé de production d'une structure en nid d'abeilles en cordiérite comprenant les étapes de : préparer un lot de matériau de cordiérite dont les composants majeurs consistent en talc, kaolin, kaolin calciné et alumine qui forment ensemble une composition chimique consistant en 45-55% en poids de SiO₂, 32-40% en poids de Al₂O₃ et 12-15% en poids de MgO ; former un corps à l'état vert de ladite structure en nid d'abeilles en cordiérite par extrusion en utilisant ledit lot de matériau de cordiérite ; et cuire ledit corps à l'état vert en ladite structure en nid d'abeilles en cordiérite, ledit procédé étant caractérisé en ce que :
au moins une portion dudit kaolin calciné est obtenue en délaminant et en calcinant une argile de kaolin avant de la mélanger avec les autres composants pour former ledit lot de façon que ladite argile de kaolin délaminée et calcinée ait une teneur en TiO₂ de pas plus de 1,5% en poids.

2. Procédé de production d'une structure en nid d'abeilles en cordiérite, comprenant les étapes : préparer un lot de matériau de cordiérite dont les composants majeurs consistent en talc, kaolin, kaolin calciné et alumine qui donnent ensemble une composition chimique consistant en 45-55% en poids de SiO₂, 32-40% en poids de Al₂O₃ et 12-15% en poids de MgO ; former un corps à l'état vert de ladite structure en nid d'abeilles en cordiérite par extrusion en utilisant ledit lot de matériau de cordiérite ; et cuire ledit corps à l'état vert en ladite structure en nid d'abeilles en cordiérite, ledit procédé étant caractérisé en ce que :
au moins une portion dudit kaolin calciné est obtenue en délaminant et en calcinant une argile de kaolin avant de la mélanger avec les autres composants pour former ledit lot, de manière que ladite argile de kaolin délaminée et calcinée ait une teneur en TiO₂ de pas plus de 1,5% en poids, ledit talc consistant en un mélange d'une première poudre de talc ayant une teneur en CaO de pas plus de 0,4% en poids et une grandeur des cristallites de pas plus de 10 µm et une seconde poudre de talc ayant une teneur en CaO de plus de 0,4% en poids et une grandeur des cristallites de pas moins de 30 µm.

3. Procédé selon la revendication 1 ou 2 où ledit kaolin calciné en tant que composant majeur dudit lot de matériau de cordiérite comporte de plus une calcine d'une argile de kaolin ayant une teneur en TiO₂ de pas plus de 2,5% en poids.

4. Procédé selon l'une quelconques des revendications 1-3 où ladite étape de cuisson dudit corps à l'état vert consiste à chauffer ledit corps à l'état vert à 1100°C à une allure ne dépassant pas 250°C/heure puis à chauffer ledit corps à l'état vert à une température de 1350-1440°C à une allure de 30°C/heure à 300°C/heure, et finalement à maintenir ledit corps à l'état vert à la température de cuisson pendant un temps de 0,5 heure à 24 heures.
